(19) Europäisches Patentamt
European Patent Office
Office européen des brevets

(11) Veröffentlichungsnummer: **0 028 696**
**A1**

(12) # EUROPÄISCHE PATENTANMELDUNG

(21) Anmeldenummer: 80105674.8

(22) Anmeldetag: 20.09.80

(51) Int. Cl.³: C 08 G 18/18
C 08 G 59/68, G 03 C 1/68
C 09 D 3/58, C 09 D 3/72

(30) Priorität: 04.10.79 DE 2940332

(43) Veröffentlichungstag der Anmeldung:
20.05.81 Patentblatt 81/20

(84) Benannte Vertragsstaaten:
BE DE FR GB IT

(71) Anmelder: BAYER AG
Zentralbereich Patente, Marken und Lizenzen
D-5090 Leverkusen 1, Bayerwerk(DE)

(72) Erfinder: Mayer, Wolfram, Dr.
Mozartstrasse 10
D-4150 Krefeld(DE)

(72) Erfinder: de Cleur, Eckhard, Dr.
Aubruchsgraben 14
D-4100 Duisburg 46(DE)

(72) Erfinder: Rudolph, Hans, Dr.
Haydnstrasse 9
D-4150 Krefeld 1(DE)

(54) **Verwendung von quartären Ammoniumsalzen als latente Katalysatoren in Beschichtungsmassen auf Basis von Polyurethan- oder Epoxiharz-Vorprodukten, die diese Katalysatoren enthaltenden Beschichtungsmassen, sowie ein Verfahren zur Herstellung von Beschichtungen.**

(57) Die Erfindung betrifft die Verwendung von unter dem Einfluß von Licht der Wellenlänge 250 - 500 nm tertiäre Amine abspaltenden quatären Ammoniumsalzen, insbesondere solchen auf Basis von tertiären Aminen des Molekulargewichtsbereichs 59-500, als latente Katalysatoren in Beschichtungsmassen auf Basis von Polyurethan- oder Epoxiharz-Vorprodukten, derartige Ammoniumsalze enthaltende Beschichtungsmassen der gennannten Art, sowie ein Verfahren zur Herstellung von Überzügen bei welchem man beliebige Substrate mit derartigen Beschichtungsmassen beschichtet und anschließend die Beschichtung durch Bestrahlung mit Licht einer Wellenlänge zwischen 250 und 500 nm aushärtet.

EP 0 028 696 A1

Croydon Printing Company Ltd.

0028696

BAYER AKTIENGESELLSCHAFT 5090 Leverkusen, Bayerwerk
Zentralbereich
Patente, Marken und Lizenzen Wr/kl-c

Verwendung von quartären Ammoniumsalzen als latente Katalysatoren in Beschichtungsmassen auf Basis von Polyurethan- oder Epoxiharz-Vorprodukten, die diese Katalysatoren enthaltenden Beschichtungsmassen, sowie ein Verfahren zur Herstellung von Beschichtungen

Die vorliegende Erfindung betrifft die Verwendung von quartären Ammoniumsalzen als unter dem Einfluß von Licht der Wellenlänge 250 - 500 nm aktivierbare, latente Katalysatoren in Beschichtungsmassen auf Basis von Polyurethan- oder Epoxiharz-Vorprodukten, derartige latente Katalysatoren enthaltende Beschichtungsmassen auf Basis von unter dem katalytischen Einfluß von tertiären Aminen aushärtbaren Polyurethan- oder Epoxiharz-Vorprodukten, sowie ein Verfahren zur Beschichtung beliebiger Substrate unter Verwendung derartiger Beschichtungsmassen und anschließender Aushärtung der Beschichtung unter dem Einfluß von Licht der Wellenlänge 250 - 500 nm.

Tertiäre Amine stellen bekanntlich die Isocyanat-Polyadditionsreaktionen und auch die Aushärtung von Epoxiharz-Vorprodukten beschleunigende Katalysatoren dar und

werden in der Praxis in großem Umfang für diesen Verwendungszweck eingesetzt. Für viele Anwendungszwecke wäre es jedoch erwünscht, nicht die freien Amine einzusetzen, sondern die Amine dem Reaktionsgemisch in einer verkappten Form zuzusetzen, aus welcher sie zu einem definierten Zeitpunkt freigesetzt werden, wodurch die gewünschte Reaktion gestartet wird.

Wie nunmehr überraschend gefunden wurde, gelingt es, die literaturbekannte (vgl. Th. D. Walsh und R.C. Long, J. Amer. Chem. Soc. 89, 3943 (1967) und M.A. Ratcliff und J. K. Kochi, J. Org. Chem. 36, 3112 (1971)) Instabilität von quartären Ammoniumsalzen und unter Einwirkung von Licht durch Verwendung derartiger Ammoniumsalze als latente, durch Bestrahlung aktivierbare Beschleuniger in Beschichtungsmassen auf Basis von Polyurethan- oder Epoxiharz-Vorprodukten praktisch zu nutzen.

Gegenstand der vorliegenden Erfindung ist daher die Verwendung von unter dem Einfluß von Licht der Wellenlänge 250 bis 500 nm tertiäre Amine abspaltenden quartären Ammoniumsalzen als latente Katalysatoren in Beschichtungsmassen auf Basis von unter dem beschleunigendem Einfluß von tertiären Aminen aushärtbaren Polyurethan- oder Epoxiharz-Vorprodukten.

Gegenstand der vorliegenden Erfindung sind auch Beschichtungsmassen auf Basis von in Gegenwart von tertiären Aminen aushärtenden Polyurethan- oder Epoxiharz-Vorprodukten, dadurch gekennzeichnet, daß sie 0,1 bis 10 Gew.-%, bezogen auf Feststoffgehalt, eines unter der Einwirkung von Licht der Wellenlänge 250 bis 500 nm tertiäres Amin abspaltenden quartären Ammoniumsalzes auf Basis eines tertiären Amins des Molekulargewichtsbereichs 59 bis 500 enthalten.

Gegenstand der vorliegenden Erfindung ist schließlich auch ein Verfahren zur Herstellung von Überzügen durch Beschichtung beliebiger Substrate mit Beschichtungsmassen auf Basis von Polyurethan- oder Epoxiharz-Vorprodukten und anschließendes Aushärten der so hergestellten Beschichtung, dadurch gekennzeichnet, daß man

a) als Beschichtungsmassen solche der obengenannten Art verwendet und

b) die Beschichtung durch Bestrahlung mit Licht einer Wellenlänge zwischen 250 und 500 nm aushärtet.

Bei den erfindungsgemäß zum Einsatz gelangenden Beschichtungsmassen handelt es sich um solche, welche als Bindemittel Polyurethan- oder Epoxiharz-Vorprodukte enthalten, die unter dem katalytischen Einfluß

von tertiären Aminen ausgehärtet werden können, insbesondere um derartige Bindemittel enthaltende Lacke. Diese als Bindemittel eingesetzten Polyurethan- oder Epoxiharz-Vorprodukte sind an sich bekannt. Bei den Bindemitteln auf Polyurethan-Basis unterscheidet man zwischen Zweikomponenten- und Einkomponenten-Systemen. Im erstgenannten Fall werden die beiden Komponenten (Polyisocyanat einerseits; gegenüber Isocyanaten reaktive Verbindung andererseits), gegebenenfalls in Anwesenheit eines Lösungsmittels, vermischt. Eine Reaktion der beiden Komponenten läßt sich dabei nur dann vollständig vermeiden, wenn man verkappte Polyisocyanate einsetzt, die erst beim Erhitzen das freie Isocyanat abspalten; die Anwendung solcher Systeme ist aber auf einzubrennende Lackierungen beschränkt. Immerhin haben auch die Lackmischungen, welche freie Polyisocyanate enthalten, eine mehr oder weniger lange Lebensdauer (Pot-life), die es ermöglicht, diese Lacke in technisch befriedigender Weise von Hand aus oder maschinell auf die Unterlagen aufzutragen, auf denen sie dann unter Polyurethanbildung endgültig aushärten und vernetzen. Einkomponentensysteme enthalten dagegen ein Addukt mit freien Isocyanatgruppen aus Polyhydroxylverbindungen und einem Überschuß an Polyisocyanat, wobei nach dem Auftrag durch Reaktion der freien NCO-Gruppen im Lack mit Wasser (Luftfeuchtigkeit) Vernetzung erfolgt. Auch hierbei muß man dafür Sorge tragen, daß eine vorzeitige Vernetzung während der Lagerung des Lackes unterbleibt, indem man die Luftfeuchtigkeit ausschließt und/ oder wasserbeseitigende Mittel zusetzt.

Andererseits ist es erwünscht, daß nach dem Auftragen des Lackes auf die Unterlage eine möglichst schnelle Vernetzung und Trocknung erfolgt. Sowohl bei Einkomponenten- als auch bei Zweikomponentenlacken ist es möglich, durch den Zusatz von an sich bekannten Reaktionsbeschleunigern die Härtungsreaktion zu fördern. Die Forderung der beschleunigten Vernetzungsreaktion auf der Unterlage widerspricht aber der gleichzeitig zu erhebenden Forderung nach einer möglichst langen Verarbeitungsfähigkeit. Im Prinzip wäre es denkbar, der Lackmischung einen Katalysator erst kurz vor der Applikation auf die Unterlage zuzufügen. Das mag zwar bei einem Handverfahren im kleinen Maßstab möglich sein, verbietet sich aber bei großtechnischer, maschineller Arbeitsweise, da die Lackmischungen in der Maschine längere Verweilzeiten, zum Teil bei höherer Temperatur, besitzen und eine ungewollte Verkürzung der Verarbeitungsspanne (Pot-life) durch die beschleunigende Wirkung des Katalysators nicht zu vermeiden ist. Man hat auch bereits daran gedacht, den Katalysator noch nachträglich nach dem Auftragen der Lackmischung auf die Unterlage, etwa durch Aufdüsen im gasförmigen Zustand, aufzubringen; das aber erfordert aufwendige zusätzliche maschinelle Einrichtungen. Überdies sind zwangsläufig nur einige wenige Katalysatoren auf diese Weise verarbeitbar.

Prinzipiell dieselben Probleme wie bei den oben geschilderten Polyurethan-Einkomponenten- und Zweikomponentensystem treten auch bei Beschichtungsmassen auf Basis von Epoxyharzen auf, deren Vernetzung im allgemeinen ebenfalls mittels tertiärer Amine katalysiert werden muß. In der DE-OS 2 357 859 wird vorgeschlagen, zu diesem Zweck den Beschichtungsmassen Salze von tertiären Aminen mit bestimmten $\alpha$-substituierten Carbonsäuren zuzusetzen. Beim Erhitzen auf 70 bis 200°C zersetzen sich diese Ammoniumsalze unter Decarboxylierung, wonach unter dem katalytischen Einfluß des freiwerdenden Amins die Beschichtung rasch aushärtet.

Mit den erfindungsgemäßen quartären Ammoniumsalzen werden nunmehr verkappte tertiäre Aminkatalysatoren zur Verfügung gestellt, welche eine rasche Aushärtung der Beschichtung schon bei Raumtemperatur durch Bestrahlen mit kurzwelligem Licht ermöglichen und welche Lackierungen mit besonders glänzender Oberfläche ergeben.

Bei den erfindungsgemäße zu verwendenden latenten Katalysatoren handelt es sich um quartäre Ammoniumsalze, die unter dem Einfluß von Licht der Wellenlänge 250 - 500 nm das ihnen zugrundeliegende freie tertiäre Amin abspalten. Im allgemeinen handelt es sich bei diesen Ammoniumsalzen um solche auf Basis von tertiären Aminen des Molekulargewichtsbereichs 59 - 500.
Die erfindungsgemäß geeigneten Ammoniumsalze sind im allgemeinen kristalline Verbindungen mit definiertem Schmelzpunkt. Sie sind in vielen organischen Lösungsmitteln löslich, z.B. in Aceton, Acetonitril, Chloroform, Methylenchlorid, Methanol, Ethanol und Ethylenglykolmonomethyletheracetat.

Beispiele für erfindungsgemäß geeignete quartäre Ammoniumsalze sind Benzyltrimethylammoniumchlorid, Benzyltriethylammoniumjodid, Benzyldiethylmethylammoniumbromid, Dibenzyldimethylammoniumchlorid, Benzyldicyclohexylmethylammoniumbromid, 2,5-Dimethoxybenzyltrimethylammoniumjodid, p-Chlorbenzyldiethyl-methylammoniumbromid, Bis-(4-methoxybenzyl)-dimethylammoniumjodid, Phenyltrimethylammoniumacetat, p-Toluyltrimethylammoniumchlorid, p-Methoxytrimethylammoniumjodid, p-Fluorphenyldiethylmethylammoniumchlorid, 4-Picolyltrimethylammoniumbromid, 2-Furfuryldiethylmethylammoniumjodid, 3-(Trimethylammoniummethyl)-5-methoxyindol, N,N-Dimethyl-p-methoxyindanyliumbromid, N,N-Dimethyl-6-methoxychinoliniumjodid, N,N-Dimethyl-5-methoxy-isochinoliniumjodid, α-Naphthyl-trimethylammoniumjodid.

Zu den bevorzugten Ammoniumsalzen gehören solche, deren Kation ein Trialkyl-benzyl-ammonium- oder ein Trisalkylphenyl-ammonium-ion darstellt, in welchem die Alkylreste gleich oder verschieden sind und $C_1$-$C_4$-Alkylreste darstellen und in welchen der aromatische Ring durch einen oder mehrere elektronendrückenden Substituenten substituiert sind. Derartige Substituenten sind z.B. Hydroxyl-, Halogen-, Nitro-, Cyano- oder Carbonamido-Gruppen oder auch Alkoxy-, Alkylmercapto-, Alkylcarbonyl- oder Alkoxycarbonyl-Gruppen mit insgesamt bis zu 6 Kohlenstoffatomen oder aber auch Aroxy-, Arylmercapto- oder Aryl-carbonyl-Gruppen mit 6 bis 12 Kohlenstoffatomen im Arylrest. In diesen Ammoniumsalzen liegen im allgemeinen Chlorid-,

Bromid- oder Jodid-Anionen vor.

Zu den besonders bevorzugten erfindungsgemäß zu verwendenden Ammoniumsalzen gehören solche der Formel

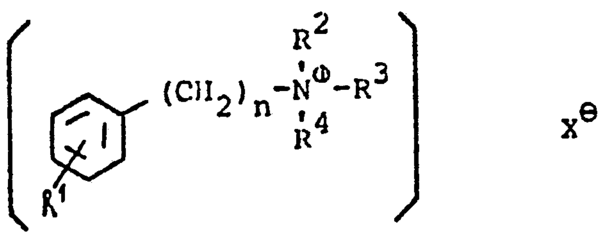

in welcher

$R^1$ für Wasserstoff, eine Methyl-, Methoxy- oder Phenoxygruppe steht,

$R^2$ für einen $C_1$-$C_4$-Alkylrest oder einen Benzylrest steht,

$R^3$ und $R^4$ für gleiche oder verschiedene Reste stehen und jeweils $C_1$-$C_4$-Alkylreste bedeuten,

n für 0 oder 1 steht und

$X^{\ominus}$ für ein Bromid-, Chlorid- oder Jodid-Anion steht.

Erfindungsgemäß können die latenten Beschleuniger in einer Menge von 0,1 bis 10 %, vorzugsweise 1 bis 7 %, insbesondere 3 bis 6 % Gewichtsprozent, bezogen auf Feststoff der Beschichtungsmassen, zum Einsatz.

Als Bindemittel kommen in den erfindungsgemäßen Beschichtungsmassen die an sich bekannten, in Gegenwart von tertiären Aminen vernetztenden Einkomponenten- und Zweikomponentenpolyurethansysteme in Betracht, wie sie in der Lack- und Beschichtungstechnik an sich bekannt sind. Einkomponentensysteme sind, wie bereits oben kurz erwähnt, gegebenenfalls in inerten organischen Lösungsmitteln gelöste Vorpolymerisate mit einem Gehalt von ca. 1 bis 25 Gew.-%, vorzugsweise 2,5 bis 19 Gew.-%, an freien NCO-Gruppen, welche durch Umsetzung von höhermolekularen und/oder niedermolekularen Verbindungen mit gegenüber Isocyanaten reaktiven Gruppen, wie sie nachstehend beschrieben werden, mit einem Überschuß an den nachstehend beschriebenen Polyisocyanaten hergestellt werden. Bei Zweikomponentenpolyurethanen handelt es sich um ein gegebenenfalls in einem inerten organischen Lösungsmittel gelöstes Gemisch aus einer höhermolekularen Polyhydroxylverbindung (z.B. einem Hydroxylgruppen aufweisenden Vorpolymeren aus Polyisocyanaten und einem Überschuß an Polyolen), einerseits und einem Polyisocyanat andererseits.

Für die erfindungsgemäßen Beschichtungsmassen kommen aliphatische, cycloaliphatische, araliphatische, aromatische und heterocyclische Polyisocyanate in Frage, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

n = 2-4, vorzugsweise 2,
und
Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen,
bedeuten, z.B. Äthylen-diisocyanat, 1,4-Tetramethylendiisocyanat, 1,6-Hexamethylendiisocyanat, Trimethylhexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat sowie Naphthylen-1,5-diisocyanat.

Ferner kommen beispielsweise erfindungsgemäß in Frage: Triphenylmethan-4,4',4"-triisocyanat, Polyphenyl-polymethylenpolyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreakt-onen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt

werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugte Polyisocyanate sind Hexamethylendiisocyanat, dessen Isocyanurat und dessen Biuret; 1-Isocyanato-3,3,5-trimethyl-5-isocyanatomethyl-cyclohexan (Isophorondiisocyanat); die Toluylendiisocyanate und deren Isocyanurate; das Mischisocyanurat aus Toluylendiisocyanat und Hexamethylendiisocyanat; das Umsetzungsprodukt aus 1 Mol Trimethylolpropan und 3 Mol Toluylendiisocyanat sowie rohes Diphenylmethandiisocyanat,

Geeignete höhermolekulare Verbindungen mit mindestens zwei gegenüber Isocyanaten reaktionsfähigen Wasserstoffatomen sind solche mit einem Molekulargewicht in der Regel von 400 bis 50 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende

Verbindungen, speziell solche vom Molekulargewicht 500 bis 25 000, vorzugsweise 700 bis 20 000, z.B. mindestens zwei, in der Regel 2 bis 8, vorzugsweise aber 2 bis 4, Hydroxylgruppen aufweisende Polyester. Polyether, Polythioether, Polyacetale, Polycarbonate, Polyacrylate, Polyesteramide und OH-Präpolymere, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Terephthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bisglykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäß geeignet.

c) Unter den Polythioäthern seien insbesondere die Kondensationsprodukte von Thiodiglykol mit sich selbst und/oder mit anderen Glykolen, Dicarbonsäuren,

Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäß geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Acrylatharze, welche als hydroxylgruppenhaltige Komponente verwendet werden können, sind Homo- oder Copolymerisate mit mindestens zwei Hydroxylgruppen pro Molekül, wobei z.B. folgende Monomere als Ausgangsprodukte gewählt werden können:

Ester der Acrylsäure und Methacrylsäure mit zweiwertigen, gesättigten, aliphatischen Alkoholen mit 2 - 4 C-Atomen, wie z.B. 2-Hydroxyäthylacrylat, 2-Hydroxypropylacrylat, 4-Hydroxybutylacrylat und die entsprechenden Methacrylsäureester; Acrylsäure und Methacrylsäure; Acrylsäure- und Methacrylsäurealkylester mit 1 - 18, vorzugsweise 1 - 8 C-Atomen in der Alkoholkomponente, wie z.B. Methylacrylat, Äthylacrylat, Propylacrylat, Isopropylacrylat, n-Butylacrylat, tert.-Butylacrylat, 2-Äthylhexylacrylat, Stearylacrylat und die entsprechenden Methacrylsäureester; Acrylsäure- und Methacrylsäurecyclohexylester; Acrylnitril und Methacrylnitril; Acrylamid und Methacrylamid; N-Methoxymethyl(meth)acrylsäureamid.

h) Auch bereits Urethan- oder Harnstoffgruppen und/oder polymerisationsfähige CC-Doppelbindungen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

i) Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über ätherbrücken verbundenen verschiedenen Segmenten aufgebaut ist.

j) Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzung zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind erfindungsgemäß geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen,

in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Iombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol XVI, "Polyuretanes, Chemistry and Technology", verfaßt von Saunders-Frisch, Interscience Publishers, New York, London Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 - 50 000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

Erfindungsgemäß geeignete niedermolekulare Verbindungen mit mindestens zwei gegenüber Isocyanaten reaktionsfähigen Wasserstoffatomen (Molekulargewicht von 32 bis 400) sind ebenfalls vorzugsweise Hydroxylgruppen aufweisende Verbindungen mit in der Regel 2 bis 8, vorzugsweise 2 bis 4, gegenüber Isocyanaten reaktionsfähigen Wasserstoffatomen.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:
Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Melekulargewicht bis 400, Dibutylenglykol, höhere Polybutylenglykole mit einem Molekulargewicht bis 400, 4,4'-Dihydroxy-diphenylpropan und Di-hydroxymethyl-hydrochinon.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 739 154 und 2 738 512). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß geeignete Beschichtungssysteme auf Basis von Epoxiharz-Vorprodukten sind beispielsweise Triglycidylurazol, Triglycidylisocyanurat; Polyepoxide mit Molgewichten bis zu 2000, wie sie aus Bisphenol A und Epichlorhydrin erhalten werden; Bisglycidylester der Terephthalsäure, der Isophthalsäure, der Phthalsäure, Tetrahydrophthalsäure, Hexahydrophthalsäure oder Hexahydroterephthalsäure; Trisglycidylester der Trimellitsäure; Tetraglycidylester und ß-Methylglycidylester der Pyromellitsäure, Glycidylderivate des Hydantoins gemäß der Formel

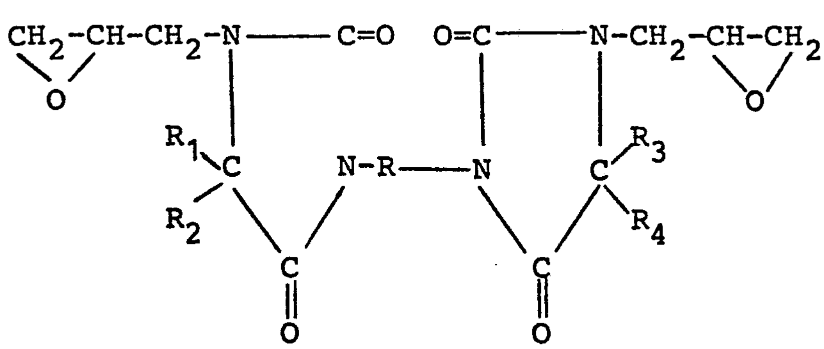

worin

R einen zweiwertigen aliphatischen, cycloaliphatischen oder araliphatischen Rest darstellt und

$R_1$,$R_2$,$R_3$ und $R_4$ je ein Wasserstoffatom oder einen aliphatischen oder cycloaliphatischen Kohlenwasserstoffrest bedeuten, oder $R_1$ und $R_2$ bzw. $R_3$ und $R_4$ zusammen einen zweiwertigen aliphatischen oder cycloaliphatischen Kohlenwasserstoffrest, vorzugsweise einen Tetramethylen- oder Pentamethylenrest, bilden.

Vorzugsweise bedeuten in der allgemeinen Formel $R_1$,$R_2$,$R_3$ und $R_4$ Wasserstoff oder niedere Alkylreste mit 1-4 C-Atomen und R einen Alkylenrest mit 1-4 C-Atomen.

Weitere Polyepoxidharze sind zugänglich durch Kondensationsreaktionen von Epichlorhydrin mit primären und/oder sekundären Aminen, Hydroxyl- und/oder Carboxylgruppen enthaltenden Polyestern, Hydroxylgruppen aufweisenden Phenol-Formaldehyd-Kondensaten oder auch Polyätherpolyolen. Die Härtung dieser Polyepoxidharze erfolgt in an sich bekannter Weise mit Aminen bzw. Polyaminen oder Amiden bzw. Polyamiden oder mit Polycarbonsäuren, wobei unter diesem Begriff z.B. auch freie Carboxylgruppen enthaltende Polyester fallen sollen, sowie auch mit Mercapto- oder phenolische Hydroxylgruppen aufweisenden Verbindungen.

Selbstverständlich können allen diesen Lacksystemen zur Erzielung spezieller Eigenschaften auch andere Harze wie z.B. Ketonharze, Nitrocellulose, PVC-Mischpolymerisate, Celluloseacetobutyrate usw. zugemischt werden. Auch andere in der Lackiertechnik übliche Hilfsmittel wie Verlaufshilfsstoffe,

Pigmente, Füllstoffe und weitere an sich bekannte Additive können erfindungsgemäß mitverwendet werden.

Die erfindungsgemäßen Beschichtungsmassen können bis zu 90 Gew.-%, vorzugsweise bis zu 60 Gew.-%, eines organischen Lösungsmittels enthalten. Beispiele für solche Lösungsmittel sind Toluol, Xylol, aromatenarme bzw. aromatenfreie Kohlenwasserstoffreaktionen, Äthylacetat, Butylacetat, Äthylenglykolmonomethylätheracetat, Äthylenglykolmonoäthylätheracetat, Aceton, Methyläthylketon, Cyclohexanon sowie Mischungen dier Verbindungen.

Die erfindungsgemäßen Beschichtungsmassen eignen sich für die Lackierung bzw. Beschichtung beliebiger Unterlagen wie z.B. von Metallen wie Aluminium oder Stahl, von Asbestzement, Leder Textilien, Gummi, Papier, Glas, Stein und den verschiedenartigsten Kunststoffen. Besonders geeignet sind sie für die Lackierung von Holz und Metall.

Bevorzugt werden die erfindungsgemäßen Lack- und Beschichtungssysteme maschinell verarbeitet. Man bedient sich dabei der an sich bekannten Auftragstechniken wie z.B. Spritzen, Sprühen, Tauchen, Rollen und Gießen. Die Schichtdicken liegen im allgemeinen zwischen 1 und 1000μ, vorzugsweise zwischen 4 und 200μ.

Nach dem Auftragen des Lacks bzw. der Beschichtung wird mit Licht der Wellenlänge 250 bis 500 nm belichtet. Die Bestrahlungsdauer beträgt im allgemeinen 0,1 bis 300 Sekunden, vorzugsweise 1 bis 80 Sekunden, je nach der Dicke der aufgetragenen Schicht und der Leistung des Strahlers. Unter den Einfluß des kurzwelligen Lichts zerfällt, wie schon erläutert,

das im Lack enthaltene erfindungsgemäße Ammoniumsalz. Das freiwerdende Amin wirkt dann als Katalysator für die Härtungsreaktion.

Vorzugsweise wird erfindungsgemäß etwa bei Raumtemperatur (ca. 10 - 30°C) beschichtet.

Die erfindungsgemäßen Beschichtungsmassen besitzen eine sehr lange Verarbeitbarkeit und eine größere Lagerstabilität; bei der Bestrahlung mit kurzwelligem Licht gelieren sie jedoch außerordentlich rasch und härten danach schnell aus - überraschenderweise auch dann, wenn es sich um keine Klarlacke sondern um pigmentierte Systeme handelt. Die erfindungsgemäß zu verwendenden latenten Katalysatoren stellen oftmals auch unter dem Einfluß von Hitze tert. Amine abspaltende Verbindungen dar. Sie können daher prinzipiell auch als Hitze-aktivierbare Katalysatoren in unter dem Einfluß von Hitze aushärtenden Systemen eingesetzt werden.

Die folgenden Beispiele dienen zur Erläuterung der Erfindung. Wenn nicht anders vermerkt, sind Mengenangaben als Gewichtsteile bzw. Gewichtsprozente zu verstehen.

Die quartären Ammoniumsalze lassen sich nach literaturbekannten Methoden leicht darstellen (Houben Weyl, Bd. 11/2, S. 592 ff).

Methode I

Man löst X Mol eines tert. Amins in Aceton und gibt bei Raumtemperatur X Mol eines Alkylhalogenids zu. Unter exothermer Reaktion entsteht quantitativ das quartäre Ammoniumsalz.

Methode II

Man löst X Mol eines Benzylhalogenids in Aceton und gibt bei Raumtemperatur ein tert. Amin zu.

Nach diesen Methoden werden z.B. erhalten:

Trimethylbenzylammoniumchlorid
" bromid
" jodid
Trimethyl-4-methoxybenzylammoniumchlorid
" -3- " "
Trimethyl-3,4-dimethoxybenzylammoniumchlorid
Trimethylphenylammoniummethylsulfat
Trimethyl-4-methoxyphenylammoniummethylbromid
" " jodid
Dimethylphenylbenzylammoniumchlorid
Dimethyldibenzylammoniumbromid
Dibenzylmethylphenylammoniumchlorid
Trimethyl-2,4-dimethoxyphenylammoniumbromid

In der nachstehenden Tabelle werden die Schmelzpunkte einiger besonders gut geeigneter Ammoniumsalze angegeben.

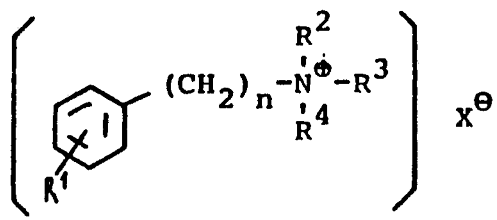

| Bsp. | n | $R^1$ | $R^2$ | $R^3$ | $R^4$ | $X^{\ominus}$ | Schmp. ($^{o}C$) |
|---|---|---|---|---|---|---|---|
| 1 | 0 | 4-$OCH_3$ | $CH_3$ | $CH_3$ | $CH_3$ | $J^{\ominus}$ | 263-266 |
| 2 | 0 | 2-$CH_3$; 5-$OCH_3$ | $CH_3$ | $CH_3$ | $CH_3$ | $J^{\ominus}$ | 212-218 |
| 3 | 0 | 2-$CH_3$; 4-$OCH_3$ | $CH_3$ | $CH_3$ | $CH_3$ | $J^{\ominus}$ | 207-211 |
| 4 | 0 | 2,4-$OCH_3$ | $CH_3$ | $CH_3$ | $CH_3$ | $J^{\ominus}$ | 185-187 |
| 5 | 0 | H | Ø-$CH_2$ | $CH_3$ | $CH_3$ | $Cl^{\ominus}$ | 152-162 |
| 6 | 1 | H | $CH_3$ | $CH_3$ | $CH_3$ | $Cl^{\ominus}$ | 228-235 |
| 7 | 1 | H | $CH_3$ | $CH_3$ | $CH_3$ | $J^{\ominus}$ | 178-180 |
| 8 | 1 | H | $CH_3$ | $CH_3$ | $CH_3$ | $Br^{\ominus}$ | 247-251 |
| 9 | 1 | H | Ø-$CH_2$ | $CH_3$ | $CH_3$ | $J^{\ominus}$ | 195-198 |
| 10 | 1 | 3-$OC_6H_5$ | $C_2H_5$ | $C_2H_5$ | $C_2H_5$ | $Br^{\ominus}$ | 163-166 |
| 11 | 1 | 3-$OC_6H_5$ | $C_2H_5$ | $C_2H_5$ | $C_2H_5$ | $Cl^{\ominus}$ | 179-180 |

Tabelle I

Beispiel 12

Lacke, bestehend aus

264 Teilen eines pigmentierten Polyols,

100 Teilen einer 65 %igen Lösung eines biuretgruppenhaltigen aliphatischen Polyisocyanats (Umsetzungsprodukt aus 3 Mol Hexamethylendiisocyanat und 1 Mol Wasser) in Ethylenglykolmonoethyletheracetat/Xylol (1:1),

7 Teilen Initiator,

wurden in einer Schichtdicke von 15µ auf Glasplatten aufgetragen und in 4 cm Abstand von einer UV-Lampe des Typs HT Q-4-Strahler der Firma Philips (Leistung 1 KW; Intensitätsmaximum bei ca. 300 - 320 nm) 60 Sekunden lang bestrahlt, 1 Tag gelagert und auf ihre Härte untersucht. Die Ergebnisse sind in der folgenden Tabelle zusammengestellt:

| Initiator | Pendelhärte (DIN 53 157) |
|---|---|
| gemäß Beispiel 10 | 90 |
| gemäß Beispiel 11 | 120 |
| kein Initiator | 64 |

T a b e l l e 2

Das pigmentierte Polyol besteht aus

100 Teilen eines Rutil-Titandioxidpigments und

164 Teilen eines Polyethers (8 % OH-Gruppen; Säurezahl 4) aus 3 Mol Phthalsäureanhydrid, 0,05 Mol Maleinsäureanhydrid und 3,5 Mol Trimethylolpropan, 61 %ig gelöst in Ethylenglykolmonoethyletheracetat.

Patentansprüche

1. Verwendung von unter dem Einfluß von Licht der Wellenlänge 250 bis 500 nm tertiäre Amine abspaltenden quartären Ammoniumsalzen als latente Katalysatoren in Beschichtungsmassen auf Basis von unter dem beschleunigendem Einfluß von tertiären Aminen aushärtbaren Polyurethan- oder Epoxiharz-Vorprodukten.

2. Beschichtungsmassen auf Basis von in Gegenwart von tertiären Aminen aushärtenden Polyurethan- oder Epoxiharz-Vorprodukten, dadurch gekennzeichnet, daß sie 0,1 bis 10 Gew.-%, bezogen auf Feststoffgehalt, eines unter der Einwirkung von Licht der Wellenlänge 250 bis 500 nm tertiäres Amin abspaltenden quartären Ammoniumsalzes auf Basis eines tertiären Amins des Molekulargewichtsbereichs 59 bis 500 enthalten.

3. Beschichtungsmasse gemäß Anspruch 2, dadurch gekennzeichnet, daß sie 1 bis 7 Gew.-%, bezogen auf Feststoff, des quartären Ammoniumsalzes enthält.

4. Beschichtungsmasse gemäß Anspruch 2 und 3, dadurch gekennzeichnet, daß das quartäre Ammoniumsalz der Formel

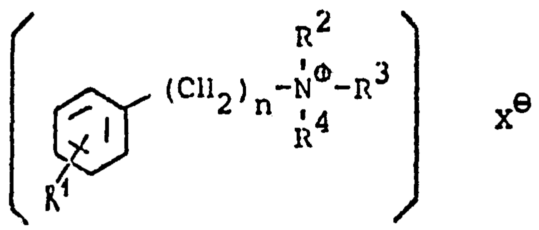

entspricht, wobei

$R^1$ für Wasserstoff, eine Methyl-, Methoxy- oder Phenoxygruppe steht,

$R^2$ für einen $C_1$-$C_4$-Alkylrest oder einen Benzylrest steht,

$R^3$ und $R^4$ für gleiche oder verschiedene Reste stehen und jeweils $C_1$-$C_4$-Alkylreste bedeuten,

n für 0 oder 1 steht und

$X^\ominus$ für ein Bromid-, Chlorid- oder Jodid-Anion steht.

5. Verfahren zur Herstellung von Überzügen durch Beschichtung beliebiger Substrate mit Beschichtungsmassen auf Basis von Polyurethan- oder Epoxiharz-Vorprodukten und anschließendes Aushärten der so hergestellten Beschichtung, dadurch gekennzeichnet, daß man

a) als Beschichtungsmasse eine solche gemäß

Anspruch 2, 3 oder 4 verwendet und

b) die Beschichtung durch Bestrahlung mit Licht einer Wellenlänge zwischen 250 und 500 nm aushärtet.

0028696

Europäisches Patentamt

# EUROPÄISCHER RECHERCHENBERICHT

Nummer der Anmeldung
EP 80 10 5674

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | CHEMICAL ABSTRACTS, Band 79, Nr. 10, 10. September 1973, Seite 45, Zusammenfassung Nr. 54364w, Columbus, Ohio, US, & JP - A - 73 22 186 (NIPPON OIL SEAL INDUSTRY CO. LTD.) (20-03-1973) * Zusammenfassung * | 1-5 |
| X | FR - A - 2 269 553 (GENERAL ELECTRIC) * Ansprüche * | 1-5 |
| | GB - A - 996 767 (POLYCELL) * Ansprüche * | 1 |
| | DE - C - 946 173 (BAYER) * Ansprüche * | 1 |
| DA | JOURNAL OF ORGANIC CHEMISTRY, Band 36, Nr. 21, 22. Oktober 1971 M.A. RATCLIFF JR. et al.: "Solvolytic and radical processes in the photolysis of Benzylammonium salts", Seiten 3112-3120 * Seite 3112 * | 1 |
| E | EP - A - 0 008 626 (BAYER) * Ansprüche 8,9 * | 1-5 |

KLASSIFIKATION DER ANMELDUNG (Int Cl.³)

C 08 G 18/18
59/68
G 03 C 1/68
C 09 D 3/58
3/72

RECHERCHIERTE SACHGEBIETE (Int. Cl.³)

C 08 G 18/18
59/68
18/16
G 03 C 1/68

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 06-02-1981 | DERAEDT |